# DEMANDE DE BREVET EUROPEEN

(11) **EP 4 841 490 A1**
(43) Date de publication de la demande: **18.11.2026**
(21) Numéro de dépôt: 26172128.6
(22) Date de dépôt: 14.04.2026
(51) Int. Cl.: G06F 21/62

(54) **PROCÉDÉ ET DISPOSITIF DE CONTRÔLE D'UN SYSTÈME DE GESTION DE CONFIDENTIALITÉ DE DONNÉES D'UTILISATEUR D'UN VÉHICULE**

(30) Priorité: 15.05.2025 FR 2505196
(71) Demandeur: Stellantis Auto SAS, 78300 Poissy (FR)
(72) Inventeur: POITEVIN, THOMAS, 91620 NOZAY (FR); BAYARD, LOIC, 91470 FORGES LES BAINS (FR)
(74) Mandataire: ESIP

(57) **Abrégé**

La présente invention concerne un procédé et un dispositif de contrôle d'un système de gestion de confidentialité de données d'utilisateur d'un véhicule, dit système de gestion de confidentialité. Le véhicule comprend un écran d'affichage (11) arrangé dans un habitacle du véhicule, l'écran d'affichage (11) comprenant une pluralité de dispositifs d'acquisition d'images comprenant chacun un objectif (21, 22). A cet effet, des données d'obturation représentatives d'obturation de la pluralité d'objectifs (21, 22) de la pluralité de dispositifs d'acquisition d'images sont reçues de la pluralité de dispositifs d'acquisition d'images. Le système de gestion de confidentialité est contrôlé en fonction des données d'obturation.

## Description

### Domaine technique

L'invention concerne les procédés et dispositifs de contrôle d'un système de gestion de confidentialité de données d'utilisateur d'un véhicule, notamment mais non exclusivement un véhicule automobile. L'invention concerne également un procédé et un dispositif de contrôle d'utilisation de données d'utilisateur d'un véhicule.

### Arrière-plan technologique

Les systèmes d'infodivertissement embarqués dans les véhicules contemporains sont devenus des interfaces centrales pour de nombreuses fonctions, allant de la navigation à la communication, en passant par la gestion de l'environnement du véhicule. Certains de ces systèmes collectent, utilisent et communiquent un volume croissant de données personnelles concernant les conducteurs et les passagers. Ces données comprennent par exemple la localisation géographique du véhicule, les habitudes de conduite, les contacts, les préférences d'utilisation, ainsi que données enregistrées par des caméras et/ou microphones embarqués dans le véhicule.

Pour répondre aux préoccupations en matière de vie privée, certains véhicules embarquent des solutions pour limiter l'utilisation et le partage de données privées, avec par exemple des systèmes de gestion de confidentialité de données d'utilisateur. Ces solutions sont prévues pour limiter le partage des données personnelles vers les serveurs du constructeur ou vers d'éventuelles entités tierces. Le contrôle de ces fonctions ou systèmes de confidentialité varient d'un constructeur à un autre, voire selon les modèles, ce qui complique leur utilisation par les utilisateurs de ces véhicules.

Ainsi, le contrôle de solutions ou systèmes de gestion de la confidentialité embarqués se fait habituellement via l'interface homme-machine (IHM) du véhicule affichée sur un écran tactile du véhicule. Le contrôle d'un tel système de gestion de confidentialité, par exemple pour activer ou de désactiver certaines fonctions sensibles, telles que la géolocalisation, l'enregistrement audio ou vidéo, ou encore la transmission de données télématiques, requiert de naviguer dans les différents menus de l'IHM pour arriver dans celui relatif au contrôle des paramètres du système de gestion de la confidentialité. L'utilisation d'une telle IHM est peu intuitive et difficile à concilier avec le maintien d'une bonne attention pour la conduite du véhicule. En effet, les différents appuis tactiles à effectuer pour atteindre le bon menu de l'IHM peut perturber l'attention du conducteur, ce qui présente un risque de sécurité pour le véhicule, ses passagers et les autres usagers de la route.

### Résumé de la présente invention

Un objet de la présente invention est de résoudre au moins l'un des problèmes de l'arrière-plan technologique décrit précédemment.

Un objet de la présente invention est par exemple de faciliter le contrôle ou la commande d'un système de gestion de confidentialité de données d'utilisateur d'un véhicule.

Un autre objet de la présente invention est par exemple de minimiser la perte d'attention du conducteur dans l'utilisation ou le contrôle du système de gestion de confidentialité de données d'utilisateur du véhicule.

Selon un premier aspect, la présente invention concerne un procédé de contrôle d'un système de gestion de confidentialité de données d'utilisateur d'un véhicule, dit système de gestion de confidentialité, le véhicule comprenant un écran d'affichage arrangé dans un habitacle du véhicule, l'écran d'affichage comprenant une pluralité de dispositifs d'acquisition d'images comprenant chacun un objectif, le procédé étant mis en œuvre par au moins un processeur et comprenant les étapes suivantes :
- réception de données d'obturation représentatives d'obturation de la pluralité d'objectifs de la pluralité de dispositifs d'acquisition d'images, les données d'obturation étant reçues de la pluralité de dispositifs d'acquisition d'images ;
- contrôle (72) du système de gestion de confidentialité en fonction des données d'obturation.

L'utilisation des dispositifs d'acquisition d'images, aussi appelés caméras, intégrés dans un écran du véhicule tel que l'écran central arrangé au niveau de la planche de bord détectant l'obturation de leur objectif respectif, typiquement par le doigt du conducteur du véhicule, pour contrôler le système de gestion de confidentialité offre au conducteur du véhicule un moyen simple et intuitif pour interagir avec le système de gestion de confidentialité. Cela évite au conducteur de devoir naviguer dans l'IHM du véhicule pour par exemple contrôler l'activation ou la désactivation de l'affichage des images des angles morts par le système de gestion de confidentialité. Cela permet de commander le système de gestion de confidentialité tout en conservant l'attention sur la route, ce qui améliore la sécurité du véhicule et de ses passagers.

L'utilisation des dispositifs d'acquisition existants intégrés dans l'écran permet en outre de ne pas ajouter d'organe de commande physique dans l'habitacle du véhicule pour contrôler le système de gestion de confidentialité, ce qui réduit les coûts de développement et de fabrication du véhicule.

Selon une variante, le contrôle correspond à :
- un contrôle de désactivation d'un ensemble déterminé de fonctions embarquées dans le véhicule partageant au moins une partie des données d'utilisateur lorsque les données d'obturation correspondent à des premières données représentatives d'une obturation séquentielle temporellement de la pluralité d'objectifs selon un premier ordre d'obturation de chaque objectif de la pluralité d'objectifs représentatif d'un balayage de la pluralité d'objectifs selon un premier sens de balayage ; et/ou
- un contrôle d'activation d'un mode de confidentialité parmi une pluralité de modes de confidentialité lorsque les données d'obturation correspondent à des deuxièmes données représentatives d'une obturation séquentielle temporellement de la pluralité d'objectifs selon un deuxième ordre d'obturation de chaque objectif de la pluralité d'objectifs représentatif d'un balayage de la pluralité d'objectifs selon un deuxième sens de balayage opposé au premier sens de balayage ; et/ou
- un contrôle de désactivation de l'ensemble déterminé de fonctions embarquées dans le véhicule pour une durée déterminée lorsque les données d'obturation correspondent à des troisièmes données représentatives d'une obturation simultanée de la pluralité d'objectifs pendant une durée d'obturation supérieur à une durée seuil déterminée ; et/ou
- un contrôle d'activation d'une fonction d'ajustement de paramètres du système de gestion de confidentialité lorsque les données d'obturation correspondent à des quatrièmes données représentatives d'une double obturation de la pluralité d'objectifs comprenant deux obturations successives temporellement de la pluralité d'objectifs simultanément dans un intervalle de temps déterminé ; et/ou
- un contrôle d'affichage d'un indicateur graphique représentatif du mode de confidentialité activé lorsque les données d'obturation correspondent à des cinquièmes données

représentatives d'une simple obturation de la pluralité d'objectifs comprenant une unique obturation simultanée de la pluralité d'objectifs dans l'intervalle de temps déterminé.

Selon une autre variante, le procédé comprend en outre une étape de contrôle d'affichage d'un contenu graphique déterminé fonction du contrôle du système de gestion de confidentialité.

Selon encore une variante, la pluralité d'objectifs étant intégrée dans une encoche formée dans l'écran d'affichage, le contenu graphique est affiché dans une zone adjacente à l'encoche, la zone adjacente étant fonction du contrôle du système de gestion de confidentialité.

Selon une autre variante, le procédé comprend en outre une étape d'activation d'une fonction de contrôle du système de gestion de confidentialité par interaction avec la pluralité d'objectifs suivant une réception de données d'activation reçues d'un ensemble de dispositifs embarqués dans le véhicule, l'ensemble de dispositifs comprenant au moins un capteur et/ou au moins un contrôleur de système d'aide à la conduite embarqué, les données d'activation étant représentatives d'au moins une condition d'activation de la fonction de contrôle du système de gestion de confidentialité.

Selon une variante additionnelle, les données d'activation appartiennent à un ensemble de données comprenant :
- des données représentatives de démarrage du véhicule ;
- des données représentatives d'un changement de profil d'utilisateur du véhicule ;
- des données représentatives d'activation d'une fonction embarquée utilisant des données d'utilisateurs ;
- des données représentatives de localisation du véhicule ; et
- des données représentatives d'une commande vocale.

Selon un deuxième aspect, la présente invention concerne un dispositif de contrôle d'un système de gestion de confidentialité de données d'utilisateur d'un véhicule, le dispositif comprenant une mémoire associée à un processeur configuré pour la mise en œuvre des étapes du procédé selon le premier aspect de la présente invention.

Selon un troisième aspect, la présente invention concerne un système de gestion de confidentialité de données d'utilisateur d'un véhicule comprenant un dispositif tel que décrit ci-dessus selon le deuxième aspect de la présente invention, le système comprenant en outre une pluralité de dispositifs d'acquisition d'images compris dans un écran d'affichage du véhicule.

Selon un quatrième aspect, la présente invention concerne un véhicule, par exemple de type automobile, comprenant un dispositif tel que décrit ci-dessus selon le deuxième aspect de la présente invention ou un système tel que décrit ci-dessus selon le troisième aspect de la présente invention.

Selon un cinquième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 7 annexées, sur lesquelles :
[Fig. 1] illustre schématiquement une partie d'habitacle d'un véhicule équipé d'un système de gestion de confidentialité de données d'utilisateur, selon un exemple de réalisation particulier de la présente invention ;
[Fig. 2] illustre schématiquement un écran d'affichage du véhicule de la figure 1, selon un exemple de réalisation particulier et non limitatif de la présente invention ;
[Fig. 3] illustre schématiquement une commande du système de gestion de confidentialité de données d'utilisateur du véhicule de la figure 1 par obturation des objectifs d'une pluralité de dispositifs d'acquisition d'images compris dans l'écran d'affichage de la figure 2, selon un premier exemple de réalisation particulier et non limitatif de la présente invention ;
[Fig. 4] illustre schématiquement une commande du système de gestion de confidentialité de données d'utilisateur du véhicule de la figure 1 par obturation des objectifs d'une pluralité de dispositifs d'acquisition d'images compris dans l'écran d'affichage de la figure 2, selon un deuxième exemple de réalisation particulier et non limitatif de la présente invention ;
[Fig. 5] illustre schématiquement une commande du système de gestion de confidentialité de données d'utilisateur du véhicule de la figure 1 par obturation des objectifs d'une pluralité de dispositifs d'acquisition d'images compris dans l'écran d'affichage de la figure 2, selon un troisième exemple de réalisation particulier et non limitatif de la présente invention ;
[Fig. 6] illustre un dispositif configuré pour contrôler le système de gestion de confidentialité de données d'utilisateur du véhicule de la figure 1, selon un exemple de réalisation particulier et non limitatif de la présente invention.
[Fig. 7] illustre un organigramme des différentes étapes d'un procédé de contrôle du système de gestion de confidentialité de données d'utilisateur du véhicule de la figure 1, selon un exemple de réalisation particulier et non limitatif de la présente invention.

### Description des exemples de réalisation

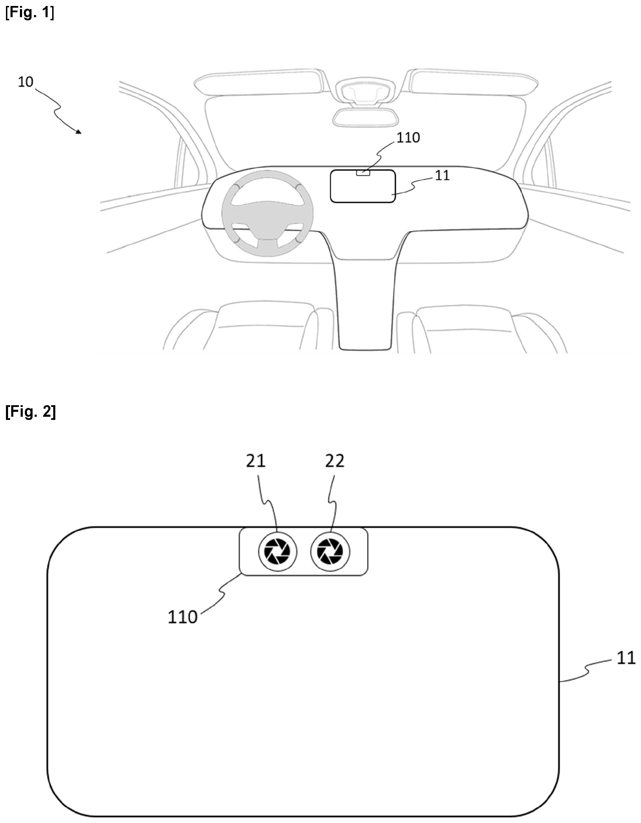

Un procédé et un dispositif de contrôle d'un système de gestion de confidentialité de données d'utilisateur d'un véhicule vont maintenant être décrits dans ce qui va suivre en référence conjointement aux figures 1 à 7. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Selon un exemple particulier et non limitatif de réalisation de la présente invention, le contrôle d'un système de gestion de confidentialité de données d'utilisateur, dit système de gestion de confidentialité, est mis en œuvre par un ou plusieurs calculateurs du véhicule, notamment par un ou plusieurs processeurs de ce ou ces calculateurs. Le véhicule comprend avantageusement un écran d'affichage comprenant une pluralité de dispositifs d'acquisition d'images, ou caméras, par exemple arrangées au niveau d'une encoche formée dans l'écran d'affichage. Chaque dispositif d'acquisition d'image comprend un objectif, lequel est par exemple protégée par une couche de protection en verre de l'écran d'affichage.

Des données, dites données d'obturation, représentatives d'obturation de la pluralité d'objectifs de la pluralité de dispositifs d'acquisition d'images sont reçues depuis la pluralité de dispositifs d'acquisition d'images, chaque dispositif d'acquisition d'image détectant qu'un objet, par exemple un doigt d'un utilisateur du véhicule 10, masque son objectif et bloque la lumière pénétrant dans son objectif. Le système de gestion de confidentialité est alors contrôlé en fonction de ces données, le contrôle correspondant par exemple au contrôle de désactivation d'une ou plusieurs fonctions embarquées du véhicule (mises en œuvre par un ou plusieurs systèmes embarqués) partageant ou utilisant des données d'utilisateur, c'est-à-dire des données privées, selon le contenu des données d'obturation.

La figure 1 illustre schématiquement une partie d'habitacle du véhicule 10, selon un exemple de réalisation particulier et non limitatif de la présente invention.

Le véhicule 10 correspond par exemple à un véhicule à moteur thermique, à moteur(s) électrique(s) ou encore un véhicule hybride avec un moteur thermique et un ou plusieurs moteurs électriques. Le véhicule 10 correspond ainsi par exemple à un véhicule terrestre, par exemple une automobile, un camion, un car.

Le véhicule 10 embarque avantageusement un système d'affichage comprenant un ou plusieurs écrans d'affichage et un calculateur configuré pour contrôler ce ou ces écrans d'affichage pour afficher un ensemble d'informations et/ou un ensemble de contenu(s) d'une interface homme-machine, dite IHM, graphique. Le système d'affichage comprend ainsi par exemple un écran d'affichage 11 arrangé au niveau de la planche de bord du véhicule 10, par exemple au milieu de la planche de bord ou dans une zone faisant face au conducteur du véhicule 10. L'écran d'affichage 11 correspond par exemple à un écran d'affichage à interface tactile, dit écran tactile. Le calculateur correspond par exemple au calculateur du système d'infodivertissement, dit calculateur IVI (de l'anglais « In-Vehicle Infotainment » ou en français « Infodivertissement embarqué ») du véhicule 10.

L'écran d'affichage 11 correspond par exemple à un écran de type LCD (de l'anglais « Liquid Crystal Display » ou en français « Affichage à cristaux liquides »), par exemple de type TFT (de l'anglais « Thin-Film Transistor » ou en français « Transistor en film mince »), ou OLED (de l'anglais « Organic Light-Emitting Diode » ou en français « Diode électroluminescente organique »).

L'écran d'affichage 11 comprend avantageusement une pluralité de dispositifs d'acquisition d'image, par exemple 2, 3 ou plus de dispositifs d'acquisition d'images. Le terme caméra est utilisé dans le reste de la description pour désigner un dispositif d'acquisition d'image.

La pluralité de caméras est intégrée dans l'écran d'affichage 11, par exemple dans une encoche 110 formée dans l'écran d'affichage 11, par exemple dans une zone située en haut et au milieu de l'écran d'affichage, le bord supérieur de l'encoche 110 correspondant par exemple au bord supérieur de l'écran d'affichage 11. Cette encoche 110 diminue la surface d'affichage de l'écran d'affichage 11 en ce que la zone correspondant à l'encoche 110 ne comprend pas de cellules (par exemple des cristaux liquides ou des diodes électroluminescentes organiques) permettant l'affichage de pixels d'image. De la même manière, la surface couvrant l'encoche 110 n'est pas tactile lorsque l'écran d'affichage 11 correspond à un écran tactile, ce qui diminue la surface tactile permettant d'interagir avec l'IHM du véhicule 10.

Chaque caméra de la pluralité de caméra est équipée d'un objectif, lequel est disposé dans l'encoche 110 derrière une surface vitrée de protection correspondant à la surface vitrée de protection de l'écran d'affichage 11.

Chaque caméra de la pluralité de caméras est par exemple configurée pour l'acquisition de données représentatives du visage du conducteur, par exemple des images du visages, des données relatives à certains points du visage, des données relatives à certaines parties du visage (par exemple les yeux, les paupières). Selon un autre exemple, chaque caméra de la pluralité de caméras est configurée pour l'acquisition d'images de l'habitacle du véhicule 10. Chaque caméra correspond par exemple à une ou plusieurs des dispositifs d'acquisition suivants :
- caméra infrarouge ;
- caméra d'acquisition d'image de type RGB (de l'anglais « Red, Green, Blue » ou en français « Rouge, vert, bleu ») ;
- caméra d'acquisition d'image associée à un ou plusieurs dispositifs (par exemple une ou plusieurs LED (de l'anglais « Light-Emitting Diode » ou en français « Diode électroluminescente ») émettant de la lumière dans l'infrarouge ou dans la bande proche de l'infrarouge.

Le véhicule 10 embarque en outre un ensemble de systèmes embarqués correspondant par exemple à des systèmes ADAS, et notamment un système de gestion de confidentialité de données d'utilisateur. Le système de gestion de confidentialité est configuré pour contrôler l'utilisation des données d'utilisateur, c'est-à-dire pour contrôler ou gérer les fonctions utilisant et/ou partageant ces données d'utilisateur, pour contrôler l'acquisition de telles données d'utilisateur, le partage ou la communication de ces données d'utilisateur à des tiers, par exemple à des serveurs contrôlés par le constructeur du véhicule 10 ou par d'autres entités (assurance par exemple).

La figure 2 illustrent l'écran d'affichage 11, selon un mode de réalisation particulier.

L'écran d'affichage 11 selon l'exemple de la figure 2 comprend 2 caméras dont les objectifs 21 et 22 sont visibles dans l'encoche 110. La pluralité de caméras comprend ainsi une première caméra (ou premier dispositif d'acquisition d'images) avec un premier objectif 21 et une deuxième caméra (ou deuxième dispositif d'acquisition d'images) avec un deuxième objectif 22. En considérant que l'écran d'affichage est vu depuis le point de vue du conducteur du véhicule 10 ou d'un passager du véhicule 10 regardant l'écran d'affichage, la première caméra 21 correspond à la caméra gauche et la deuxième caméra 22 correspond à la caméra droite.

Tel que décrit précédemment, le premier objectif 21 et le deuxième objectif 22 sont logés dans l'encoche 110 derrière la surface vitrée de protection protégeant et couvrant l'ensemble de l'écran d'affichage 11 et l'encoche 110. Lorsque cette surface vitrée est associée à une interface tactile, la zone de la surface vitrée recouvrant l'encoche 110 n'est pas tactile, l'interface tactile ne recouvrant pas l'encoche 110.

Un processus de contrôle du système de gestion de confidentialité de données d'utilisateur, dit système de gestion de confidentialité, du véhicule 10 est avantageusement mis en œuvre par un ou plusieurs processeurs d'un ou plusieurs calculateurs du véhicule 10, par exemple le ou les calculateurs en charge de contrôler le système de gestion de confidentialité et/ou le ou les calculateurs en charge de contrôler la pluralité de caméras.

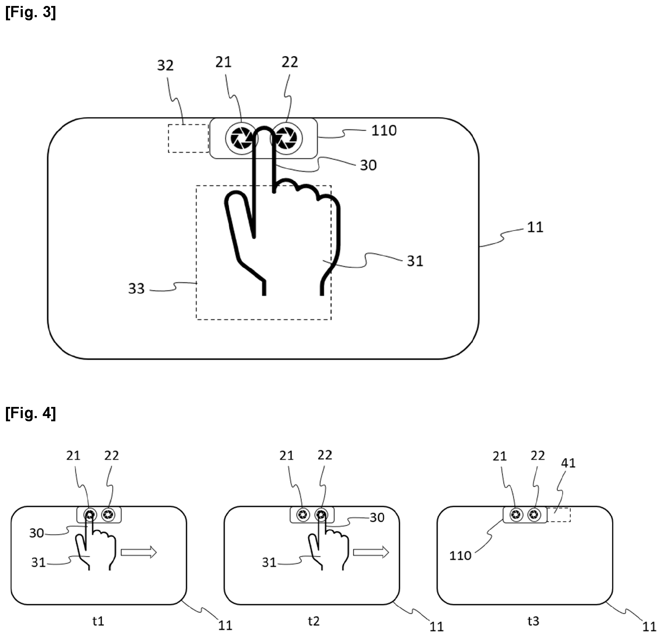

Le processus est décrit selon des exemples de réalisation illustrés sur les figures 3, 4 et 5 pour lesquels la pluralité de caméra comprend deux caméras. Le processus ne se limite cependant pas à de tels exemples mais s'étend à tout nombre de caméras supérieur ou égal à 2.

Selon un premier exemple de réalisation, le contrôle du système de gestion de confidentialité de données d'utilisateur est actif ou possible à tout instant, par exemple dès que le véhicule 10 a démarré ou dès qu'un utilisateur du véhicule 10 à mis le contact.

Selon un deuxième exemple de réalisation, le contrôle du système de gestion de confidentialité de données d'utilisateur n'est actif ou possible que lorsqu'une fonction de contrôle de ce système de gestion de confidentialité par interaction avec la pluralité d'objectifs est activée.

L'activation de la fonction de contrôle du système de gestion de confidentialité est déclenchée lorsqu'une ou plusieurs conditions d'activation sont remplies. L'activation de la fonction de contrôle du système de gestion de confidentialité est ainsi obtenue ou déclenchée suivant la réception de données d'activation reçues d'un ensemble de dispositifs embarqués dans le véhicule 10, les données d'activation étant représentatives de la ou les conditions d'activation de la fonction de contrôle du système de gestion de confidentialité. L'ensemble de dispositifs comprend au moins un capteur et/ou au moins un contrôleur de système d'aide à la conduite embarqué du véhicule 10.

La fonction de contrôle du système de gestion de confidentialité est par exemple activée lorsqu'un ensemble de conditions déterminées à partir des données d'activation, ou représentées par ces données d'activation, reçues des systèmes ADAS et autres capteurs sont remplies.

Quelques exemples d'ensemble de conditions reflétées ou représentées par les données d'activation et déclenchant l'activation de la fonction de contrôle du système de gestion de confidentialité sont fournis ci-dessous :
- démarrage du véhicule 10 ou alimentation du réseau embarqué du véhicule 10 ;
- activation d'une fonction utilisant et/ou partageant des données privées d'un utilisateur du véhicule, par exemple suivant une commande d'activation de la fonction depuis un organe de commande ;
- changement d'utilisateur du véhicule 10 détecté lors d'un changement d'un profil d'utilisateur commandé depuis l'IHM du véhicule 10 ;
- détection d'une localisation déterminée en fonction des données de géolocalisation du véhicule 10, par exemple lorsque le véhicule 10 est en approche du domicile de l'utilisateur, du lieu de travail, etc. ; ou
- réception d'une commande d'activation de la fonction d'activation, par exemple via une commande vocale ou via l'IHM graphique du véhicule 10.

Les exemples ci-dessus sont fournis à titre d'illustration et la liste des situations / conditions de génération de la requête d'affichage n'est pas exhaustive.

Les données d'activation appartiennent à un ensemble de données comprenant :
- des données représentatives de démarrage du véhicule 10 ;
- des données représentatives d'un changement de profil d'utilisateur du véhicule 10 ;
- des données représentatives d'activation d'une fonction embarquée utilisant des données d'utilisateurs ;
- des données représentatives de localisation du véhicule 10 ; et
- des données représentatives d'une commande vocale reçues par exemple d'un microphone arrangé dans l'habitacle du véhicule 10 et couplé à un système de commande ou reconnaissance vocale du véhicule 10.

Les opérations du processus décrites ci-après s'appliquent de la même manière au premier exemple de réalisation et au deuxième exemple de réalisation décrits précédemment.

Dans une première opération du processus, des données, dite données d'obturation, représentatives d'obturation de la pluralité d'objectifs de la pluralité de caméras (ou pluralité de dispositifs d'acquisition d'images) sont reçues depuis la pluralité de caméras (ou pluralité de dispositifs d'acquisition d'images), par exemple du réseau de capteurs photosensibles de chacune de ces caméras de la pluralité de caméras.

Selon un premier exemple, les données d'obturation sont représentatives de l'obturation partielle ou totale simultanée de chacun des objectifs, c'est-à-dire du premier objectif 21 et du deuxième objectif 22. Ce premier exemple est illustré sur la figure 3 où un doigt

(ou plusieurs doigts) d'une main 31 recouvre simultanément le premier objectif 21 et le deuxième objectif 22.

L'obturation d'un objectif tel que le premier objectif 21 et/ou le deuxième objectif 22 est obtenue lorsque le conducteur du véhicule 10, voire le passager avant, pose un doigt (ou plusieurs doigts) 30 couvrant totalement ou partiellement le premier objectif 21 et/ou le deuxième objectif 22, par exemple sur la surface vitrée protégeant le premier objectif 21 et le deuxième objectif 22.

L'obturation d'un objectif est détectée par le réseau de capteurs photosensibles de la caméra comprenant l'objectif. En effet, lorsque le conducteur ou un passager applique son (ou ses) doigt(s) 30 pour obturer l'objectif de la caméra, ce ou ces doigts empêchent la lumière d'atteindre le réseau de capteurs photosensibles de la caméra disposé derrière l'objectif selon le sens de parcours de la lumière venant de l'extérieur de la caméra et traversant l'objectif avant d'atteindre le réseau de capteurs photosensibles.

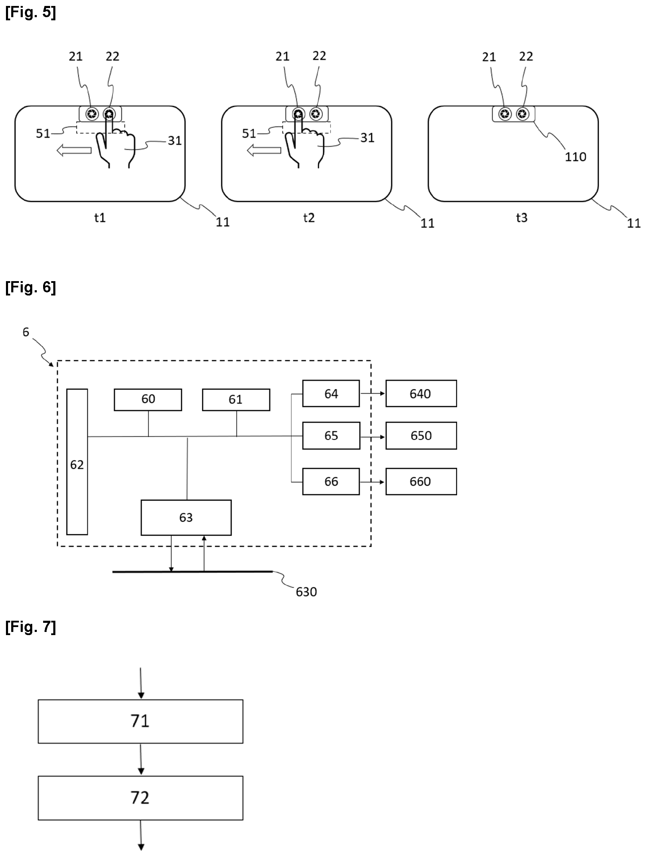

Selon ce premier exemple, les données d'obturation sont représentatives de :
- un balayage selon un premier sens de balayage (tel qu'illustré sur la figure 4) selon lequel le premier objectif 21 et le deuxième objectif 22 sont obturés séquentiellement d'un point de vue temporel selon un premier ordre d'obturation, c'est-à-dire une obturation du premier objectif 21 suivie d'une obturation du deuxième objectif 22 ; les données d'obturation sont alors appelées premières données et sont représentatives d'un geste correspondant à un balayage horizontal des objectifs dans un sens ou dans l'autre, c'est-à-dire de la gauche vers la droite ou de la gauche vers la droite ;
- un balayage selon un deuxième sens de balayage (tel qu'illustré sur la figure 5) opposé au premier sens de balayage, selon lequel le premier objectif 21 et le deuxième objectif 22 sont obturés séquentiellement d'un point de vue temporel selon un deuxième ordre d'obturation, c'est-à-dire une obturation du deuxième objectif 22 suivie d'une obturation du premier objectif 21 ; les données d'obturation sont alors appelées deuxièmes données et sont représentatives d'un geste correspondant à un balayage horizontal des objectifs dans un sens ou dans l'autre, c'est-à-dire de la gauche vers la droite ou de la gauche vers la droite ;
- une obturation, dite longue, du premier objectif 21 et du deuxième objectif 22 simultanément correspondant à une obturation simultanée de la pluralité d'objectifs c'est-à-dire du premier objectif 21 et du deuxième objectif 22, pendant une durée d'obturation supérieure à une durée seuil déterminée (la durée seuil étant par exemple égale à 500 ou 1000ms) ; les données d'obturation sont alors appelées troisièmes données et sont comparables à un appui tactile long sur un écran tactile ;

- une double obturation du premier objectif 21 et du deuxième objectif 22 simultanément comprenant deux obturations successives temporellement de la pluralité d'objectifs, c'est-à-dire du premier objectif 21 et du deuxième objectif 22, dans un intervalle de temps déterminé (par exemple égal à 500 ou 1000ms) ; les données sont alors appelées quatrièmes données lors de la double obturation qui peut être comparée à un double clic tactile effectué sur un écran tactile ;
- une simple obturation du premier objectif 21 et du deuxième objectif 22 simultanément correspondant à une unique obturation simultanée de la pluralité d'objectifs, c'est-à-dire du premier objectif 21 et du deuxième objectif 22, sur un intervalle de temps déterminé ; les données sont alors appelées cinquièmes données.

La distinction entre simple obturation et double obturation est obtenue par le calculateur en charge du processus en déclenchant un décompte temporel (« timer ») lorsqu'une obturation simultanée de l'ensemble des objectifs (c'est-à-dire le premier objectif 21 et le deuxième objectif 22) est détectée, c'est-à-dire lorsque les données reçues de la pluralité de caméras (c'est-à-dire de la première caméra et de la deuxième caméra) indiquent que l'intensité lumineuse reçue par le réseau de capteurs photosensibles de chaque caméra passe sous un premier seuil proche de 0. La fin de l'obturation est détectée lorsque l'intensité lumineuse repasse au-dessus d'un deuxième seuil supérieur au premier seuil.

Le décompte temporel possède une durée égale à la durée de l'intervalle de temps déterminé, laquelle durée est par exemple égale à 500, 1000 ou 2000 ms.

Pendant le décompte temporel, le calculateur enregistre en mémoire le nombre d'obturations. Si une seule obturation est détectée pendant le décompte temporel, alors l'obturation correspond à une simple obturation (correspondant à un unique appui du doigt 30 sur la pluralité d'objectifs bloquant l'entrée de lumière dans les objectifs 21 et 22). Si 2 (ou plus) obturations sont détectées pendant le décompte temporel alors l'obturation correspond à une double obturation (correspondant à double appui du doigt 30 sur la pluralité d'objectifs, un double appui correspondant à un premier contact du doigt 30 bloquant l'entrée de lumière dans les objectifs 21 et 22, suivi d'un retrait du doigt 30 laissant passer la lumière dans les objectifs 21 et 22, suivi d'un deuxième contact du doigt 30 bloquant l'entrée de lumière dans les objectifs 21 et 22).

La figure 4 illustre une obturation séquentielle temporellement de la pluralité d'objectifs comprenant le premier objectif 21 et le deuxième objectif 22, selon un premier exemple.

Selon ce premier exemple de la figure 4, la séquence commence à un premier instant temporel t1, suivi d'un deuxième instant temporel t2 (postérieur à l'instant temporel t1) pour déclencher une ou plusieurs actions à un instant temporel t3 postérieur à l'instant temporel t2. Le doigt 30 et la main 31 effectuent un geste de balayage de la gauche vers la droite (selon la flèche illustrée sur la figure 4). A l'instant temporel t1, le balayage commence et le doigt 30 passe sur le premier objectif 21 et obture le premier objectif 21. Le geste de balayage se poursuit à l'instant temporel t2 où le doigt 30 passe sur le deuxième objectif 22 et obture le deuxième objectif 22. Selon ce geste de balayage et la commande associée, les objectifs 21 et 22 sont obturés séquentiellement d'un point de vue temporel dans un ordre déterminé, le premier objectif 21 étant obturé en premier et le deuxième objectif 22 étant obturé en second, après le premier objectif 21. Une telle obturation séquentielle temporellement des objectifs 21 puis 22 représente un geste de balayage (ou geste d'obturation) de la gauche vers la droite détecté par les réseaux de capteurs photosensibles de la première caméra 21 et de la deuxième caméra 22.

Selon un mode de réalisation particulier et optionnel, le geste de balayage n'est détecté qu'après que l'obturation simultanée des deux objectifs 21 et 22 n'ait été détectée, une telle obturation simultanée des deux objectifs 21 et 22 correspondant à la simple obturation décrite précédemment.

La figure 5 illustre une obturation séquentielle temporellement de la pluralité d'objectifs comprenant le premier objectif 21 et le deuxième objectif 22, selon un deuxième exemple.

Selon ce deuxième exemple de la figure 5, la séquence commence à un premier instant temporel t1, suivi d'un deuxième instant temporel t2 (postérieur à l'instant temporel t1) pour déclencher une ou plusieurs actions à un instant temporel t3 postérieur à l'instant temporel t2. Le doigt 30 et la main 31 effectuent un geste de balayage de la droite vers la gauche (selon la flèche illustrée sur la figure 5). A l'instant temporel t1, le balayage commence et le doigt 30 passe sur le deuxième objectif 22 et obture le deuxième objectif 22. Le geste de balayage se poursuit à l'instant temporel t2 où le doigt 30 passe sur le premier objectif 21 et obture le premier objectif 21. Selon ce geste de balayage et la commande associée, les objectifs 21 et 22 sont obturés séquentiellement d'un point de vue temporel dans un ordre déterminé, le deuxième objectif 22 étant obturé en premier et le premier objectif 21 étant obturé en second, après le deuxième objectif 22. Une telle obturation séquentielle temporellement des objectifs 22 puis 21 représente un geste de balayage de la droite vers la gauche détecté par les réseaux de capteurs photosensibles de la deuxième caméra 22 et de la première caméra 21.

Selon un mode de réalisation particulier et optionnel, le geste de balayage n'est détecté qu'après que l'obturation simultanée des deux objectifs 21 et 22 n'ait été détectée, une telle obturation simultanée des deux objectifs 21 et 22 correspondant à la simple obturation décrite précédemment.

Dans une deuxième opération du processus, le système de gestion de confidentialité est contrôlé en fonction des données d'obturation reçues à la première opération.

Le contrôle du système de gestion de confidentialité correspond par exemple à :
- un contrôle de désactivation d'un ensemble déterminé de fonctions embarquées dans le véhicule 10 partageant au moins une partie des données d'utilisateur lorsque les données d'obturation correspondent à des premières données représentatives d'une obturation séquentielle temporellement de la pluralité d'objectifs 21, 22 selon un premier ordre d'obturation de chaque objectif de la pluralité d'objectifs 21, 22 représentatif d'un balayage de la pluralité d'objectifs selon un premier sens de balayage, tel qu'illustré à la figure 4 ; et/ou
- un contrôle d'activation d'un mode de confidentialité parmi une pluralité de modes de confidentialité lorsque les données d'obturation correspondent à des deuxièmes données représentatives d'une obturation séquentielle temporellement de la pluralité d'objectifs selon un deuxième ordre d'obturation de chaque objectif de la pluralité d'objectifs 21, 22 représentatif d'un balayage de la pluralité d'objectifs selon un deuxième sens de balayage opposé au premier sens de balayage, tel qu'illustré à la figure 5 ; et/ou
- un contrôle de désactivation de l'ensemble déterminé de fonctions embarquées dans le véhicule 10 pour une durée déterminée (par exemple pendant 1h, 2h ou pendant la durée d'un trajet en cours) lorsque les données d'obturation correspondent à des troisièmes données représentatives d'une obturation simultanée de la pluralité d'objectifs 21, 22 pendant une durée d'obturation supérieur à une durée seuil déterminée ; et/ou
- un contrôle d'activation d'une fonction d'ajustement de paramètres du système de gestion de confidentialité lorsque les données d'obturation correspondent à des quatrièmes données représentatives d'une double obturation de la pluralité d'objectifs 21, 22 comprenant deux obturations successives temporellement de la pluralité d'objectifs 21, 22 simultanément dans un intervalle de temps déterminé ; et/ou
- un contrôle d'affichage d'un indicateur graphique représentatif du mode de confidentialité activé lorsque les données d'obturation correspondent à des cinquièmes données représentatives d'une simple obturation de la pluralité d'objectifs 21, 22 comprenant une unique obturation simultanée de la pluralité d'objectifs 21, 22 dans l'intervalle de temps déterminé.

Selon un mode de réalisation particulier, le processus comprend en outre une opération de contrôle d'affichage d'un contenu graphique déterminé fonction du contrôle du système de gestion de confidentialité. Selon ce mode de réalisation particulier, l'affichage d'un contenu graphique déterminé est déclenché, par exemple à la réception des données d'obturation. Le contenu graphique déterminé dépend du type de contrôle (parmi les différents types de la liste décrite précédemment), c'est-à-dire que le contenu graphique déterminé dépend des données d'obturation, et varie selon que les données d'obturation correspondent aux premières, deuxièmes, troisièmes, quatrièmes ou cinquièmes données.

Le contenu graphique déterminé est affiché dans une zone adjacente à l'encoche 110, la zone adjacente étant fonction du contrôle du système de gestion de confidentialité, c'est-à-dire que l'emplacement de la zone adjacente dépend du type de contrôle et donc des données d'obturation, selon que les données d'obturation correspondent aux premières, deuxièmes, troisièmes, quatrièmes ou cinquièmes données.

Par exemple, tel qu'illustré à la figure 4, un contenu graphique déterminé 41 est affiché dans la zone adjacente à l'encoche 110 du côté de l'encoche correspondant à la fin du geste de balayage, c'est-à-dire le côté gauche selon l'exemple particulier de la figure 4.

Selon cet exemple, le contenu graphique 41 comprend par exemple un ou plusieurs objets graphiques. Lorsque le contenu graphique ne comprend qu'un seul objet graphique, ce dernier représente par exemple la fonction qui va être exécutée suivant le balayage, c'est-à-dire la désactivation de l'ensemble des fonctions acquérant, utilisant et/ou partageant des données d'utilisateur, aussi appelées données privées.

Lorsque le contenu graphique 41 comprend plusieurs objets graphiques, un appui tactile sur un objet graphique permet de désactiver un ensemble de fonctions déterminés (par exemple un appui tactile sur un premier objet graphique déclenche la désactivation de la totalité des fonctions embarquées du véhicule 10 acquérant, utilisant et/ou partageant des données d'utilisateur et un appui tactile sur un deuxième objet graphique déclenche la désactivation d'une partie seulement de la totalité des fonctions).

Selon un autre exemple illustré sur la figure 5, un contenu graphique déterminé 51 est affiché dans la zone adjacente à l'encoche 110 et située sous l'encoche 110, l'affichage de ce contenu graphique déterminé étant déclenché dès que le geste de balayage est reconnu.

Ce contenu graphique 51 comprend par exemple une pluralité d'objets graphiques chacun associé à l'activation d'un mode de confidentialité parmi une pluralité de modes de confidentialité. Chaque mode de confidentialité permet par exemple de désactiver l'acquisition, l'utilisation et/ou le partage d'un type de données d'utilisateurs particulier lors d'un appui tactile sur l'objet graphique associé.

La pluralité de modes de confidentialité comprend par exemples les modes de confidentialité suivants :
- un premier mode de confidentialité pour désactiver l'acquisition, l'utilisation et/ou le partage de données de profil de chaque profil utilisateur (réglage de position du siège conducteur, stations radios enregistrés, préférences utilisateur pour un ensemble de systèmes embarqués, etc.) enregistré dans le véhicule 10 ;
- un deuxième mode de confidentialité pour désactiver l'acquisition, l'utilisation et/ou le partage de données de type localisation du véhicule 10 (obtenues du système de géolocalisation embarqué) ; et
- un troisième mode de confidentialité pour désactiver l'acquisition, l'utilisation et/ou le partage de données de type données audio et/ou vidéo acquises par les microphones et/ou caméras du véhicule 10.

Selon un exemple de réalisation particulier, un indicateur graphique représentant le mode de confidentialité activé (premier, deuxième ou troisième mode de confidentialité) est affiché à réception de données d'obturation correspondant aux cinquièmes données (simple obturation). Cet indicateur graphique correspond par exemple à un objet graphique identifiant le mode de confidentialité dont l'activation est en cours (suivant le balayage tactile selon le deuxième sens de balayage), cet indicateur graphique correspondant par exemple à un cercle entourant l'objet graphique associé au mode de confidentialité activé ou à un clignotement de cet objet graphique associé au mode de confidentialité activé.

Selon un autre exemple illustré sur la figure 3, un contenu graphique déterminé 32 et/ou un contenu graphique déterminé 33 sont affichés près de l'encoche 110. Le contenu graphique 32 est par exemple affiché dans une zone située à droite de l'encoche 110 et le contenu graphique 33 dans une zone par exemple située au centre de l'écran 11, l'affichage de ce contenu graphique déterminé 32, 33 étant déclenché à réception des données d'obturation.

Le contenu graphique affiché 32 comprend par exemple un ou plusieurs objets graphique représentant visuellement le type de contrôle du système de gestion de confidentialité déclenché par l'obturation effectuée.

Le contenu graphique 33 correspond par exemple à une page de l'IHM du véhicule 10 associée au système de gestion de confidentialité. Ce contenu graphique comprend par exemple une pluralité d'objets graphiques chacun configuré pour ajuster et contrôler un paramètre particulier du système de gestion de confidentialité.

La taille des objets graphiques affichés dans les contenus graphiques 32, 33, 41, 51 peut être réduite (c'est-à-dire inférieur à un seuil correspondant à la taille minimale d'un objet graphique tactile utilisé dans l'IHM du véhicule 10 et requise pour déclencher une action par l'appui tactile sur cet objet graphique tactile).

Selon un autre mode de réalisation particulier, le processus comprend en outre le rendu d'une confirmation graphique et/ou sonore lorsque le contrôle du système de gestion de confidentialité a été pris en compte et mis en œuvre suivant la réception des données d'obturation.

La figure 6 illustre schématiquement un dispositif 6 configuré pour le contrôle d'un système de gestion de confidentialité de données d'utilisateur d'un véhicule, dit système de gestion de confidentialité, par exemple le véhicule 10, selon des exemples de réalisation particuliers et non limitatifs de la présente invention. Le dispositif 6 correspond par exemple à un dispositif embarqué dans le véhicule 10, par exemple un calculateur.

Le dispositif 6 est par exemple configuré pour la mise en œuvre des opérations décrites en regard des figures 1 à 5 et/ou des étapes du procédé décrit en regard de la figure 7. Des exemples d'un tel dispositif 6 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 6, individuellement ou en combinaison, peuvent être intégrés dans un unique circuit intégré, dans plusieurs circuits intégrés, et/ou dans des composants discrets. Le dispositif 6 peut être réalisé sous la forme de circuits électroniques ou de modules logiciels (ou informatiques) ou encore d'une combinaison de circuits électroniques et de modules logiciels.

Le dispositif 6 comprend un (ou plusieurs) processeur(s) 60 configurés pour exécuter des instructions pour la réalisation des étapes du procédé et/ou pour l'exécution des instructions du ou des logiciels embarqués dans le dispositif 6. Le processeur 60 peut inclure de la mémoire intégrée, une interface d'entrée/sortie, et différents circuits connus de l'homme du métier. Le dispositif 6 comprend en outre au moins une mémoire 61 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 61.

Selon différents exemples de réalisation particuliers et non limitatifs, le dispositif 6 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 6 comprend un bloc 62 d'éléments d'interface pour communiquer avec des dispositifs externes. Les éléments d'interface du bloc 62 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type « SIGFOX^{®} » utilisant une technologie radio UBN (de l'anglais Ultra Narrow Band, en français bande ultra étroite), ou « LORA^{®} » dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 6 comprend une interface de communication 63 qui permet d'établir une communication avec d'autres dispositifs (tels que d'autres calculateurs du système embarqué) via un canal de communication 630. L'interface de communication 63 correspond par exemple à un transmetteur configuré pour transmettre et recevoir des informations et/ou des données via le canal de communication 630. L'interface de communication 63 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 6 peut fournir des signaux de sortie à un ou plusieurs dispositifs externes, tels qu'un écran d'affichage 640, tactile ou non, un ou des haut-parleurs 650 et/ou d'autres périphériques 660 (système de projection) via respectivement des interfaces de sortie 64, 65 et 66. Selon une variante, l'un ou l'autre des dispositifs externes est intégré au dispositif 6.

La figure 7 illustre un organigramme des différentes étapes d'un procédé de contrôle d'un système de gestion de confidentialité de données d'utilisateur d'un véhicule, dit système de gestion de confidentialité, par exemple le véhicule 10, selon un exemple de réalisation particulier et non limitatif de la présente invention. Le véhicule comprend un écran d'affichage arrangé dans un habitacle du véhicule, l'écran d'affichage comprenant une pluralité de dispositifs d'acquisition d'images comprenant chacun un objectif. Le procédé est par exemple mis en œuvre par un dispositif embarqué dans le véhicule 10 ou par le dispositif 6 de la figure 6.

Dans une première étape 71, des données d'obturation représentatives d'obturation de la pluralité d'objectifs de la pluralité de dispositifs d'acquisition d'images sont reçues de la pluralité de dispositifs d'acquisition d'images.

Dans une deuxième étape 72, le système de gestion de confidentialité est contrôlé en fonction des données d'obturation.

Selon une variante, les variantes et exemples des opérations décrits en relation avec l'une des figures 1 à 5 s'appliquent aux étapes du procédé de la figure 7.

Bien entendu, la présente invention ne se limite pas aux exemples de réalisation décrits ci-avant mais s'étend à un procédé de contrôle de confidentialité de données d'utilisateurs d'un véhicule qui inclurait des étapes secondaires sans pour cela sortir de la portée de la présente invention. Il en serait de même d'un dispositif configuré pour la mise en œuvre d'un tel procédé.

## Revendications

1. Procédé de contrôle d'un système de gestion de confidentialité de données d'utilisateur d'un véhicule (10), dit système de gestion de confidentialité, ledit véhicule (10) comprenant un écran d'affichage (11) arrangé dans un habitacle dudit véhicule (10), ledit écran d'affichage (11) comprenant une pluralité de dispositifs d'acquisition d'images comprenant chacun un objectif (21, 22), ledit procédé étant mis en œuvre par au moins un processeur et comprenant les étapes suivantes :
- réception (71) de données d'obturation représentatives d'obturation de la pluralité d'objectifs (21, 22) de la pluralité de dispositifs d'acquisition d'images, lesdites données étant reçues de ladite pluralité de dispositifs d'acquisition d'images ;
- contrôle (72) dudit système de gestion de confidentialité en fonction desdites données d'obturation.

2. Procédé selon la revendication 1, pour lequel ledit contrôle (72) correspond à :
- un contrôle de désactivation d'un ensemble déterminé de fonctions embarquées dans ledit véhicule partageant au moins une partie des données d'utilisateur lorsque lesdites données d'obturation correspondent à des premières données représentatives d'une obturation séquentielle temporellement de ladite pluralité d'objectifs (21, 22) selon un premier ordre d'obturation de chaque objectif de ladite pluralité d'objectifs (21, 22) représentatif d'un balayage de ladite pluralité d'objectifs selon un premier sens de balayage ; et/ou
- un contrôle d'activation d'un mode de confidentialité parmi une pluralité de modes de confidentialité lorsque lesdites données d'obturation correspondent à des deuxièmes données représentatives d'une obturation séquentielle temporellement de ladite pluralité d'objectifs (21, 22) selon un deuxième ordre d'obturation de chaque objectif de ladite pluralité d'objectifs (21, 22) représentatif d'un balayage de ladite pluralité d'objectifs selon un deuxième sens de balayage opposé audit premier sens de balayage ; et/ou
- un contrôle de désactivation dudit ensemble déterminé de fonctions embarquées dans ledit véhicule pour une durée déterminée lorsque lesdites données d'obturation correspondent à des troisièmes données représentatives d'une obturation simultanée de ladite pluralité d'objectifs (21, 22) pendant une durée d'obturation supérieur à une durée seuil déterminée ; et/ou
- un contrôle d'activation d'une fonction d'ajustement de paramètres dudit système de gestion de confidentialité lorsque lesdites données d'obturation correspondent à des quatrièmes données représentatives d'une double obturation de ladite pluralité d'objectifs (21, 22) comprenant deux obturations successives temporellement de ladite pluralité d'objectifs (21, 22) simultanément dans un intervalle de temps déterminé ; et/ou
- un contrôle d'affichage d'un indicateur graphique représentatif du mode de confidentialité activé lorsque lesdites données d'obturation correspondent à des cinquièmes données représentatives d'une simple obturation de ladite pluralité d'objectifs (21, 22) comprenant une unique obturation simultanée de ladite pluralité d'objectifs (21, 22) dans ledit intervalle de temps déterminé.

3. Procédé selon la revendication 2, comprenant en outre une étape de contrôle d'affichage d'un contenu graphique (32, 33, 41, 51) déterminé fonction du contrôle (72) du système de gestion de confidentialité.

4. Procédé selon la revendication 3, pour lequel ladite pluralité d'objectifs (21, 22) étant intégrée dans une encoche (110) formée dans ledit écran d'affichage (11), ledit contenu graphique déterminé est affiché dans une zone adjacente à ladite encoche (110), ladite zone adjacente étant fonction du contrôle (72) du système de gestion de confidentialité.

5. Procédé selon l'une des revendications 1 à 4, comprenant en outre une étape d'activation d'une fonction de contrôle dudit système de gestion de confidentialité par interaction avec ladite pluralité d'objectifs (21, 22) suivant une réception de données d'activation reçues d'un ensemble de dispositifs embarqués dans ledit véhicule (10), ledit ensemble de dispositifs comprenant au moins un capteur et/ou au moins un contrôleur de système d'aide à la conduite embarqué, lesdites données d'activation étant représentatives d'au moins une condition d'activation de ladite fonction de contrôle dudit système de gestion de confidentialité.

6. Procédé selon la revendication 5, pour lequel lesdites données d'activation appartiennent à un ensemble de données comprenant :
- des données représentatives de démarrage dudit véhicule (10) ;
- des données représentatives d'un changement de profil d'utilisateur du véhicule (10) ;
- des données représentatives d'activation d'une fonction embarquée utilisant des données d'utilisateurs ;
- des données représentatives de localisation du véhicule (10) ; et
- des données représentatives d'une commande vocale.

7. Support d'enregistrement lisible par un ordinateur sur lequel est enregistré un programme d'ordinateur comprenant des instructions pour l'exécution des étapes du procédé selon l'une des revendications 1 à 6.

8. Programme d'ordinateur comportant des instructions de code de programme pour la mise en œuvre du procédé selon l'une quelconque des revendications 1 à 6, lorsque ledit programme est exécuté par un processeur.

9. Dispositif (6) de contrôle d'un système de gestion de confidentialité de données d'utilisateur d'un véhicule (10), ledit dispositif (6) comprenant une mémoire (61) associée à au moins un processeur (60) configuré pour la mise en œuvre des étapes du procédé selon l'une des revendications 1 à 6.

10. Véhicule (10) comprenant un dispositif (6) selon la revendication 9.
